# EUROPEAN PATENT SPECIFICATION

(11) **EP 4 494 725 B1**
(45) Date of publication and mention of the grant of the patent: **18.03.2026**
(21) Application number: 24181550.5
(22) Date of filing: 11.06.2024
(51) Int. Cl.: A63G 7/00, A63G 21/20, A63G 31/02

(54) **RIDER CONTROLLED AMUSEMENT PARK RIDE**
FAHRERGESTEUERTE VERGNÜGUNGSPARKFAHRGESCHÄFTE
MANÈGE DE PARC D'ATTRACTION COMMANDÉ PAR UN UTILISATEUR

(30) Priority: 12.06.2023 US 202318208427
(43) Date of publication of application: 22.01.2025
(73) Proprietor: Disney Enterprises, Inc., Burbank, CA 91521 (US)
(72) Inventor: EVANS, Robert J., Alhambra (US)
(74) Representative: Jarrett, Daniel Phillip

(56) References cited:
- US-A1- 2009 209 357
- US-A1- 2014 309 035
- US-A1- 2021 023 465

## Description

### FIELD

The described embodiments relate generally to amusement or theme park rides providing passenger simulated or immersive experiences.

### BACKGROUND

Various amusement parks, theme parks, and other entertainment venues often provide rides or immersive experiences to guests. These rides or experiences may include vehicles or other devices to carry passengers along a path, e.g., through a thematic environment. However, many rides or experiences may be limited to predetermined experiences along a set path. Such limitations may prevent a guest or passenger from being immersed or fully engaged with the experience, e.g., the experience may not be as immersive or realistic. Additionally, many of the non-thematic elements of the ride, such as the physical track or pathway of the ride, may be visible to the passenger and remind the passenger that it is a ride only. While some rides may allow some user input to change a path or position of the vehicle, the input is often limited to a simple variation in the ride, e.g., activating a display or similar simple events. The simple variations may also remind the passenger or guest of the limitations of the simulation of the theme and prevent them from fully enjoying or engaging with the ride experience.

Accordingly, there is a need for a ride or entertainment experience that provides a more immersive experience, whether visually or through interactive engagement by the passenger with the ride experience. Additionally, there is a need for a ride that allows a passenger or guest to vary the ride experience to provide multiple unique experiences to increase the entertainment value and continued engagement with the ride experience.

US 2021/023465 A1 describes, according to its abstract, a ride system including ride vehicles. Each ride vehicle includes a rider support configured to carry a rider, a support actuator coupled to the rider support and a base of the ride vehicle and configured to move the rider support relative to the base, and a ride vehicle movement system integrated with the base and configured to move the ride vehicle relative to a ride area.
The ride system also includes a controller configured to control the support actuator and the ride vehicle movement system of each ride vehicle individually based on a choreographed routine and an input received from a selected ride vehicle. The input is indicative of an adjustment to the support actuator, the ride vehicle movement system, or both, of each ride vehicle. The input is based on a correlative adjustment to the support actuator, the ride vehicle movement system, or both, of the selected ride vehicle.

US 2014/309035 A1 describes, according to its abstract, an interactive system adapted for lean-based control of ride or video game experiences. The system includes a vehicle seat and a motion base with a vehicle base upon which the vehicle seat is mounted. The system includes an actuator assembly moving the vehicle base and seat. A control system interprets sensor input signals and generates control signals to operate the actuator assembly to move the vehicle base and seat. Force sensors positioned in the vehicle seat sense forces applied by the passenger to the vehicle seat and transmit sensor data signals to the control system. The control signals operating the driver assembly are generated based on the sensor data, which is output from left and right sensors provided in a bench of the vehicle seat as well as in a front and a back support to provide X and Y-axis values based on passenger leaning in the vehicle seat.

### SUMMARY

The present invention is directed to an interactive ride experience system according to claims 1 and 9. Additional features and embodiments of the invention are defined in the dependent claims.

### OVERVIEW OF DISCLOSURE

Embodiments of the present invention are directed to an immersive and interactive ride system.

In one example of an immersive or interactive ride experience system, the system may include a motion control system, a motion assembly, a vehicle coupled to the motion assembly and configured to be moved along at least one axis by the motion assembly, and a force sensor coupled to the vehicle and in electrical communication with the motion control system, wherein the force sensor is configured to be activated by a passenger supported by the vehicle and the motion control system generates instructions for the motion assembly to change a position of the vehicle relative to the at least one axis based on the force sensor.

In one example of the interactive ride experience system, the system may include a track, a chassis operatively coupled to the track, a motion assembly coupled to the chassis, and a vehicle coupled to the motion assembly and moveable relative to at least one axis relative to the chassis. The vehicle may include a body corresponding to a thematic element of the ride experience system. A force torque sensor may be coupled to the vehicle and in electrical communication with a motion control system, wherein the force torque sensor detects a force on or a change in position of an input device and the motion assembly modifies a position of the vehicle relative to the at least one axis corresponding to the change in position of the input device.

In one example, the interactive ride experience system may include a vehicle pathway, a chassis movable along the vehicle pathway, a motion assembly coupled to the chassis, and a vehicle coupled to the motion control assembly and movable by the motion assembly relative to the chassis. The vehicle may include an input device for a passenger to provide an input requesting a change an orientation of the vehicle, a motion control system in operative communication with the input device and the motion assembly, and one or more computer readable media (e.g., non-transitory media, or transitory media in the case of an electrical signal transmitted over a wire or an electromagnetic wave) encoded with instructions which, when executed by one or more processors of the motion control system may cause the interactive ride experience system to receive the input from the input device, the input corresponding to a request to move the vehicle from a first orientation to a second orientation. The system may determine a current arrangement of the motion assembly corresponding to the first orientation. The system may determine a second arrangement of the motion assembly corresponding to the second orientation. The system may determine a movement of the motion assembly to move from the first arrangement to the second arrangement. The system may also communicate one or more commands from the motion control system to the motion assembly to implement the movement.

A number of feature refinements and additional features are applicable in the first aspect and contemplated in light of the present disclosure. These feature refinements and additional features may be used individually or in any combination. As such, each of the following features that will be discussed may be, but are not required to be, used with any other feature combination of the first aspect.

In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 is an example diagram of an interactive ride system.
FIG. 2 is a perspective view of an example of the interactive ride system.
FIG. 3 is a perspective view of a second example of the interactive ride system.
FIG. 4 is a perspective view of a third example of the interactive ride system.
FIG. 5 is a schematic diagram of an example computer system as used by one or more devices of the interactive ride system.

### DETAILED DESCRIPTION

The description that follows includes sample systems, methods, and apparatuses that embody various elements of the present disclosure. However, it should be understood that the described disclosure may be practiced in a variety of forms in addition to those described herein.

The following disclosure relates generally to an interactive and immersive ride experience and system. The ride system may provide an environment corresponding to a theme or topic, and include various thematic elements or structures to create an immersive and realistic experience. A track, pathway, or guide system may be positioned in the environment to place passengers in the environment or to allow passengers or guests to navigate or travel along or through a path or a track. In some examples, a vehicle configured to accept and support guests or passengers may be coupled to a track or path and separately coupled to motion assembly that moves the vehicle based on input from one or more guests. For example, the motion assembly can include an articulating arm (e.g., a robotic arm or multiple linkages) that move the vehicle relative to the track, such as to move vertically, horizontally, and/or rotationally. This allows a guest to provide individual input and receive a unique output in the motion of the vehicle that can provide a more immersive and realistic experience. In one example, the vehicle may be configured to represent a hang glider and the guests can provide input to vary the vehicle orientation and speed via a handle or bar (e.g., by shifting or changing a force pressure on the bar), providing a realistic "gliding" experience. In another example, the vehicle may be configured to allow guests to provide inputs by shifting their weight in a seat or harness, providing realistic responses to changing their position in the vehicle. In additional examples, various controllers or input devices may be provided to simulate controlling a vehicle such as an airplane.

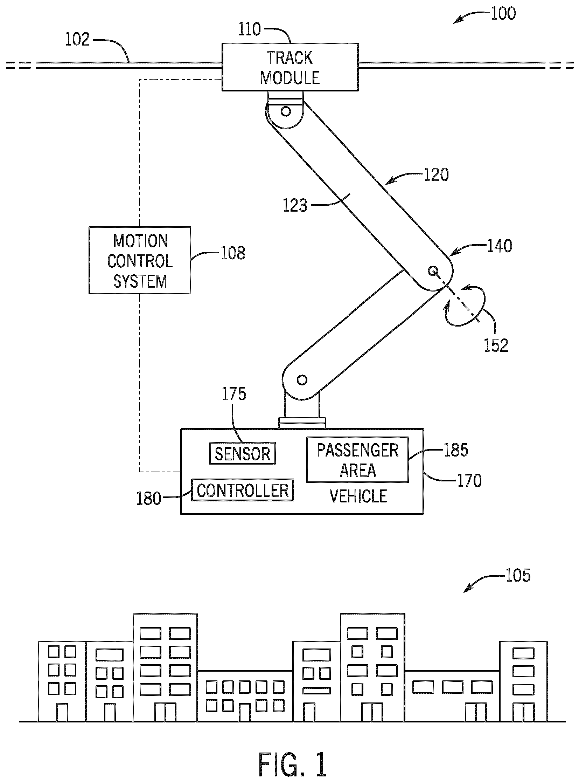

Turning to the figures, FIG. 1 illustrates a schematic diagram of an example interactive ride system or experience 100. The interactive ride system 100 may include various thematic elements corresponding to a theme or topic such as an activity (e.g. flying, diving, driving), a location (e.g. mountains, under water, various countries or regions), a character, a franchise, holidays, seasons, or various other concepts. One or more components of the system 100 may include various aesthetic or functional thematic elements to correspond with the theme or topic.

The interactive ride system 100 may include a path or track 102 positioned in a ride environment 105. A track module 110 may be coupled to or suspended from the track 102. A motion assembly 120 may allow movement of a vehicle 170 carrying one or more guests relative to the track module 110 or reorient various components of the interactive ride system 100.

The environment 105 or ride housing is the surrounding scenes and features of the ride 100 to assist in providing an immersive experience. The environment 105 may be interactive and various events or scenes may activate in response to passengers entering regions of the environment 105 or by performing various actions in the environment 105. The environment 105 may include various physical elements such as sets, animatronics, or lighting corresponding to the theme of the ride 100. For example, characters may be positioned in the environment 105 (e.g. along the track 102). The physical objects may be sized, positioned, or oriented to provide depth, texture, or a sense of immersion in the environment 105. In other examples, the lighting may be dimmed to correspond to a night atmosphere or to conceal non-thematic elements such as exit doors or sprinklers, or various hardware of the ride 100 such as supports, cables, or electronics.

In some examples, the environment 105 may be virtual in whole or in part. For example, the environment 105 may include an imager such as a projector or display that displays images on a surface, such as a screen, wall, or other area of the environment 105. In other examples, the environment 105 may be projected or displayed on headsets or glasses worn by passengers to provide a virtual or augmented reality experience. Virtual components of the environment may include displayed images of characters, special effects, movies or video game scenes, nature or habitats, or other types of interactive content objects, elements, or situations that can be varied based on a user's input.

The environment 105 may include various realistic or three-dimensional renderings to provide depth or texture to the environment 105. The depth or texture may present a more realistic perspective to passengers as they pass through the environment 105. The various realistic or three dimensional renderings may be physical objects or portions of the virtual environment. For example, various physical objects may be placed to create the appearance of a larger space or greater distances from the vehicle 170 than an actual distance from the passengers. In other examples, three dimensional renderings may be projected onto physical objects or on various display screens. The various renderings may be dynamic and may change along with predetermined changes in the environment 105, such as changes in music, weather, sound, time of day, or other changes. The various renderings may change responsive to actions or inputs from passengers or the location of passengers in the environment 105. For example, the vehicle may include various devices or options for passengers to interact with the environment 105 and the environment may update in response to the actions of the passengers. In other examples, the renderings may adjust to the position or orientation of the vehicle 170 to continue to provide a realistic perspective to the passengers. For example, the motion assembly 120 may allow different positions or orientations of vehicles 170 such that some vehicles 170 may pass over a portion of the environment while other vehicles 170 may pass along a side of the same portion of the environment 105. Accordingly, the environment 105 may dynamically update or adjust to the paths or orientations of either vehicle 170 to provide a realistic perspective of the portion of the environment 105.

The track 102 may include one or more structures such as rails, guides, cables, guide systems, or channels to define a route through or physical connection to the environment 105. For example, the track 102 may be mounted to various walls or structures of the environment 105 such as a roof, floor, ceiling, or the like. The track 102 may define a loop such that the track 102 connects back to itself (e.g. continuing along the track 102 returns to the initial starting point). The track 102 may be circuitous or curving, defining multiple bends or curves, or rises and dips, to provide a varying ride experience. In other examples, the track 102 may be a relatively stationary element defined by scaffolding, a mounting structure, or another structure fixed to a location or defining a limited range of movement.

For example, the track 102 may limit range or prevent movement and other features of the system 100, such as the environment 105 or motion assembly 120, may provide movement for simulated immersive experience.

The shape or features of the track 102 may be selected or arranged to define or include various thematic elements. The colors or structure of the track 102 may be selected to blend in or hide within the ride environment 105. In other examples, the environment 105 may include features to obscure, hide, or receive the track 102 to assist in providing an immersive experience. For example, the path or track 102 may be integrated into the ride environment 105 such as in one or more channels, frames, or supports defined by the ride environment 105. The track 102 may be positioned or attached to an upper region of the ride environment 105, such as a ceiling of a building or otherwise suspended by a structure to provide an open or soaring feeling in relation to the environment 105 for passengers 195 and add to the immersive experience. The track 102 may include connections (e.g. electrical connections, hydraulic connections, or pneumatic connections) to provide power or movement to various components of the system 100.

A track module 110 is configured to move along the track 102 (e.g., through the environment 105) and is coupled to (e.g., secured to, suspended from, or otherwise engaged) with the track 102. The track module 110 may include a chassis, bogie, or car that may move along the track 102. In various embodiments, the track module 110 may follow a predetermined path or the track module 110 or move independently forward or rearward along the track 102, such as in response to an input from a passenger.

The motion assembly 120 is configured to move the vehicle 170 relative to the track module 110, e.g., to change an orientation of the vehicle 170. The motion assembly 120 may be an articulable apparatus movable to various orientations, such as a robotic arm or boom. The motion assembly 120 may include one or more links 123 coupled together at one or more joints 140. The joints 140 may allow the links 123 to rotate about or move along one or more axes 152. The links 123 may be rigid structural elements such as bars, beams, or frames. The joints 140 may be arranged to allow movement or define the ranges of motion of the links 123 in various orientations.

The joints 140 may be revolute or rotary joints, connecting two links 123 and allowing the links 123 to rotate about an axis 152. In some examples, each of the joints 140 may be revolute joints. In other examples, the joints 140 may include linear or sliding joints, connecting two links 123 and allowing the links 123 to slide next to each other or nest within each other along an axis 152. In other examples, various other types or combinations of types of joints 140 may be used such as translation joints, universal joints, or spherical joints. In some examples, the joints 140 and links 123 may be arranged such that the rotational axes 152 of two or more joints 140 intersect at a common point (e.g. a spherical joint or a universal joint) to allow rotation of the links 123 in two or more dimensions. In other examples, two or more joints 140 may be combined into a single joint 140 (e.g. replaced with a universal joint, spherical joint, or the like).

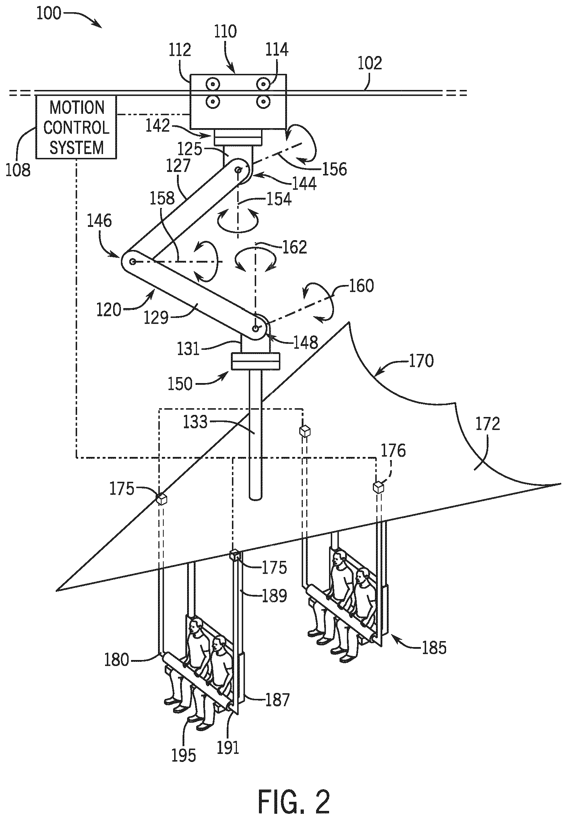

The various axis 152, links 123, and joints 140 may be aligned to provide various movements or orientations of the motion assembly 120. In some examples, the axes 152 and joints 140 may be oriented in a similar or same plane. For example, with reference to FIG. 2, the first joint 142, the second joint 144, and the third joint 146 may be arranged in the same plane (e.g. the first axis 154, the second axis 156, and the third axis 158 are aligned in parallel). Providing three revolute joints 140 in the same plane may allow for translation movement through the plane relative to the track module 110 in addition to the rotation of individual links 123. Various axis 152 may be arranged transverse or different directions to provide for movement relative to multiple planes. For example, first axis 154 and fifth axis 162 may be oriented in transverse or different directions to allow for rotation relative to two or more planes.

The motion assembly 120 may have a sufficient number of links 123 or joints 140 to move the vehicle 170 in three dimensions or six degrees of freedom (e.g. forward or rearward, left or right, up or down, rotation about yaw axis, rotation about pitch axis, or rotation about roll axis) relative to the track module 110.The number or size of the various links 123 and joints 140 may be selected to provide a range of motion corresponding to the thematic elements to create an immersive experience. For example, a ride experience 100 may have a theme corresponding to slow or gentle movements and the motion assembly 120 may include fewer links 123 or joints 140, or use links 123 or joints 140 providing a shorter or more limited range of motion. In another example, a flight simulator may require a greater number of joints 140 and links 123 to provide for increased variations in the position of the motion control assembly 120 or to provide more rapid movements.

The motion control assembly 120 may include various power elements to move or rotate the links 123 about the joints 140. The power elements may include various motors or actuators, such as linear actuators or rotary actuators. The power elements may be pneumatically, hydraulically, or electrically powered. The power elements may be coupled to the links 123 or joints 140, or to various features coupled to the links 123 or joints 140 such as cables, pulleys, fasteners, or brackets.

A vehicle or vehicle 170 may carry passengers or guests on the ride experience 100. The vehicle 170 may be shaped, colored, or otherwise visually represent or correspond to the thematic elements of the ride 100. The vehicle 170 may include a passenger area 185 to carry or support the passengers. The vehicle 170 may be modeled to correspond to the theme of the ride 100. For example, with reference to FIG. 2, the vehicle 170 may have a body 172 corresponding to an aquatic vehicle, an aerial vehicle, a ground vehicle, an animal, a fictional character or animal, or various other thematic elements. The vehicle 170 may be coupled to the motion assembly 120, or shaped in a way to prevent or limit the viewing of the motion assembly 120. The vehicle 170 may block a view of the track module 110, or track 102 by a passenger. For example, the body 172 may block the view of the passengers 195. In some examples, the vehicle 170 may be positioned below the track 102, track module 110, or motion assembly 120 and include one or more features between or above the passenger area 185 to limit or inhibit viewing of the components. By blocking a view of the motion assembly 120, track module 110, or track 102 the ride system 100 may feel more immersive to passengers 195. The vehicle 170 may include seats or other restraints for securing the passengers so that the passengers move with the vehicle.

The vehicle 170 may include a controller or input device 180 to receive or process various inputs by one or more passengers of the vehicle 170. For example, the controller 180 may be a manipulable structure or interactive device for a passenger to request a change in orientation of the vehicle 170. The controller 180 may be integrated into a feature of the passenger area 185 such as a seat, securement feature, support or frame, grab bar, or similar features. The passengers may provide an input to the controller, e.g., by one or more of shifting weight, applying pressure variations, or changing a position of the input device 180. For example, the controller 180 may be in the form of a bar, handle, joystick, or other element that is manipulatable or can receive varying input (e.g., different force values and locations) by a passenger.

The vehicle 170 may include a sensor 175 that receives or detects a passenger input. The passenger inputs may correspond to a maneuver request by the passengers. The sensor 175 may be an accelerometer, strain gauge, force sensor, torque sensor, resolver, encoder, absolute position sensor, a combination of two or more sensors or two or more types of sensors, or various other devices used to measure a physical or electrical property. The sensor 175 may be coupled to or in operative communication with the controller 180. In some examples, the sensor 175 detects an amount of force or torque on or a change in position of the controller or input device 180. For example, the sensor 175 may be coupled to the input device or may be coupled to the vehicle 170 in a position to detect forces or a change in position on the input device 180. The sensor 175 may detect discrete inputs (e.g. from a single passenger) or cumulative or average inputs from a plurality of passengers. The type of sensor 175 used may be selected based off the input device 180, the theme of the ride 100, or various other features of the ride 100.

In some examples, two or more sensors 175 may be used. For example, a first sensor 175 may be associated with a first input device 180, or a first side of the input device and a second sensor 175 may be associated with a second input device 180, or to a second side of the first input device 180. In some examples, the two or more sensors 175, 176 may detect or determine an average or cumulative force, torque, or change in position of an input device 180.

In some examples, the sensors 175 may be or include proximity sensors or the sensors 175 may be positioned through the environment 105. The sensors 175 may detect or determine distances between vehicles 170 to prevent collisions between two or more vehicles 170.

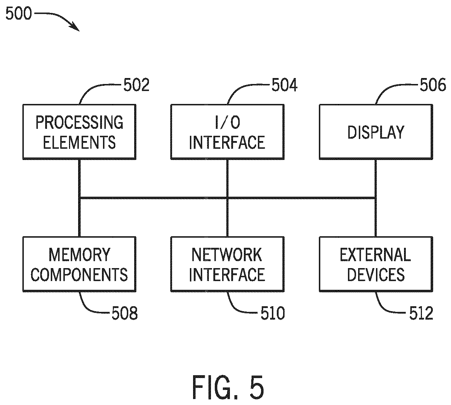

The interactive ride system 100 may include a motion control system 108. The motion control system 108 may be in communication with and generate or issue various instructions to the components of the ride system 100. For example, the motion control system 108 may determine or generate commands to change a position or move one or more of the components, or to perform various actions. In some examples, the instructions may be predetermined or the instructions may be generated during the ride 100. The motion control system 108 may be or include a computer system 500 including one or more processing elements 502, memory 508, or various interfaces and connections to communicate with various components of the ride system 100, as may be described below with reference to FIG. 5.

The motion control system 108 may be in operative communication with the vehicle 170 to receive or process user inputs, such as at from the input device or controller 180 or as detected by the sensor 175. The motion control system 108 may be in communication with the track module 110, the motion assembly 120, or the vehicle 170 to determine a current or likely orientation of one or more of the various components. The inputs may be translated into instructions to the various components by the motion control system 108. For example, an input may correspond to a maneuver request by a passenger 195 to move the vehicle 170 upward and the motion control system 108 may generate instructions and communicate with the track module 110, motion assembly 120, or the vehicle 170 to implement the instructions. In some examples, the motion control system 108 may be in communication with the ride environment 105 to dynamically update one or more features of the environment 105 in response to inputs from passengers or a position or orientation of the vehicle 170 in the environment 105.

In some examples, the motion control system 108 may predict a plurality of possible configurations of the motion control assembly 120, such as positions of the links 123 or joints 140, or the vehicle 170 that correspond to the passenger inputs. The motion control system 108 may also predict a plurality of possible movements to change from a current position or orientation to a requested or predicted orientation. For example, the motion control system 108 may determine a current or initial arrangement of the motion assembly 120. The motion control system 108 may then determine a second or requested arrangement of the motion assembly 120 as requested by a passenger at the input device 180. The motion control system 108 may then select from the plurality of possible configurations or movements a change in orientation providing the most realistic or interactive movement. The implemented changes in orientation or movement of the vehicle 170 may correspond to the thematic elements of the ride 100 to provide a more immersive experience. For example, the theme of the ride 100 may require or include assigning weight to a speed of movement, a range of motion, or changes in orientation as providing a more immersive experience and prioritize quicker movements and faster changes in orientation. In other examples, smooth movements may be prioritized and a configuration providing consistent movement or positioning may be selected. After determining a movement to change the orientation of the motion assembly 120 from the first position to the second position, the motion control system 108 may communicate corresponding commands or instructions to the motion assembly 102, the track module 110, or the vehicle 170.

The motion control system 108 may include various predetermined instructions or limitations on inputs from passengers. For example, the motion control system 108 may adjust or filter inputs by a passenger, such as to the controller 180 or as detected by the sensor 175, in generating commands to the components of the system. The motion control system 108 may determine a maneuver corresponding to an input from a passenger would generate undesirable amounts of force on passengers or components of the system 100, or result in an impact between one or more features of the system 100. The motion control system 108 may reduce or adjust a speed movement or a degree of orientation to provide a more preferred position or movement. In other examples, predetermined instructions stored on, or communicated to, the motion control system 108 may require various positions or movement of the track module 110, motion assembly 120, or the vehicle 170 at various points along the track 102. For example, the ride system 100 may include events to watch, hear, or otherwise experience in the environment 105 or as defined by the track 102. At these points, the motion control system 108 may limit, delay, or deny various input requests from the passengers.

The track 102, track module 110, vehicle 170, or motion assembly may include various connections to receive power from the track 102 to supply the power elements positioned of the motion assembly. For example, the track module 110 or the motion assembly 120 may include corresponding hydraulic, pneumatic, or electrical connections.

In operation, the guide system or track 102 may be positioned in the ride environment 105. One or more passengers may board the vehicle 170, such as in the passenger area 185. The track module 110 may begin the ride and traverse along the track 102 taking the passengers through the environment 105.

Responsive to inputs from the controller or input device 180, or as detected by the sensor 175, the motion control system 108 may generate instructions, such as in response to a passenger input, to provide instructions to the components, such as the motion assembly 120, to change the positions or orientations. The changes in position may correspond to the changes in position of the input device 180 or directions of force from the passengers as detected by sensor 175. The motion control system 108 may generate instructions to move the track module 110 forward or rearward along the track 102. The motion control system 108 may generate instructions for the motion assembly 120 to move or change an orientation of the vehicle 170 relative to the track module 110. For example, the motion control system 108 may issue commands to the power elements to move one or more of the links 123 or joints 140 to a second orientation from a first orientation, resulting in movement relative to the track module. For clarity, it should be understood that the vehicle 170 moves with the track module 110 (e.g., along the track) and then can move relative to the track module 110 (e.g., rotate, change elevation, etc.) via the motion assembly 120. In this manner, the passengers can move within the ride environment 105 and cause individual movement of the vehicle 170 along the path as well. Accordingly, each ride experience 100 may position the vehicle 170 in a different or distinct series of orientations or movements providing numerous and enjoyably unique experiences for passengers.

FIG. 2 illustrates an example of the interactive ride system 100. In this example, the ride system 100 may correspond to a hang glider or other soaring or flying device. Accordingly, thematic elements of the system or ride 100 may correspond to flying and include features that simulate flying or using a glider or system in the real world.

The track 102 may include rails, guides, or similar features. In this example, the track 102 may be coupled to or suspended from a ceiling of the environment 105 to promote the sensation or feeling of flying.

The track module 110 may include a chassis, bogie, or car 112. The chassis 112 may be connected to the track 102 by one or more sets of track engagement features 114. The track engagement features 114 may be wheels, brackets, gears or other features to connect the track module 110 and allow movement along the track 102. In some examples, the track engagement features 114 may have power or allow independent movement of the car 112 on the track, such as in response to an input from a passenger 195. In other examples, the track engagement features 114 guide the chassis 112 along the track 102 under the power of features of the track 102.

In this example, the motion assembly 120 may include a plurality of links 123 and a plurality of joints 140 coupling the plurality of links 120. To correspond to flight of a glider, the motion assembly 102 may allow six degrees of freedom (e.g. forward or rearward, up or down, left or right, change in pitch, change in yaw, or change in roll) relative to the track module 110. Additional or fewer links 123 or joints 140 may be provided to allow or promote various movements or orientations of the motion assembly 120.

In this example, the motion assembly may include a first link 125 extending from a connection between the motion assembly 120 and the track module 110. The motion assembly 120 may include a second link 127, which may extend from the first link 125 to a third link 129. The third link 129 may extend from the second link 127 to a fourth link 131. The fourth link 131 may connect to a fifth or vehicle link 133. The fifth or vehicle link 133 may extend from or couple to the vehicle 170. The various links 123 may be rigid or semi rigid structures.

The joints 140 may define connections between the links 123. For example, a first joint 142 may couple the first link 125 and the track module 110. The first joint 142 may allow rotation about a first axis 154. The first link 125 and the second link 127 may be coupled by a second joint 144. The second joint 144 may allow rotation about a second axis 156. A third joint 146 may couple the second link 127 and the third link 129. The third joint 146 may allow rotation about a third axis 158. A fourth joint 148 may couple the third link 129 and the fourth link 131. The fourth joint 148 may allow rotation about a fourth axis 160. The fourth link 131 and the vehicle link 133 may be coupled by a fifth joint 150. The fifth joint 150 may allow rotation about a fifth axis 162.

In some examples, two or more joints 140 may be combined or positioned such that two or more axes may intersect at a common point. For example, first link 125 and first joint 142 and second joint 144 may be combined into a single feature allowing rotation about both the first axis 154 and the second axis 156. In other examples, one or more of the joints 140 may be replaced with a joint 140 providing two or three separate axes 152 of rotation.

The vehicle 170 may include a body 172 and a passenger area 185. In this example, the body 172 may resemble a hang glider and include a body 172 shaped as a wing, sail, parachute, or the like, e.g., include an expanded canopy.

The passenger area 185 may include a rider support or seat 187 for passengers 195 to ride in the vehicle 170. The seats 187 may position the passengers 195 in a seated position, prone or lying position, standing position, or various other positions corresponding to the theme or shape of the body 172. The seats 187 may be a harness, chair, platform, back support, saddle, or various other structures to support passengers 195.

The seats 187 may be connected or coupled to the body 172 by a support or frame 189. The support or frame 189 may correspond to the theme. For example, the frame 189 may be a trapeze or cables to correspond to a glider, a cockpit for an aerial vehicle, a roll cage for a ground vehicle, or various other structures. The support or frame 189 may be rigid, semi-rigid or flexible, or include hinges or joints to allow one or more components of the frame 189 to move relative to the body 172. For example, the frame 189 may hingedly connect to the body 172 to allow the seats 187 to orient or move in response to movements of the vehicle 170.

The passengers 195 may be secured to the seats 187 by various securement features 191. The securement features 191 may include one or more of bars, harnesses, seat belts, or other features to secure the passenger 195 to the seat 187. As shown in FIG. 2, the securement feature 191 may be a lap bar extending across a width of the seats 187.

In this example, the controller 180 may be integrated into a feature of the passenger area 185 and the securement feature 191 (e.g. lap bar, grab bar, or similar securement features) may be the input device 180. The passengers 195 may provide inputs as they push, lean, or remove pressure from the securement feature 191. Utilizing the securement feature 191 as the input device 180, or by receiving inputs from passengers 195 by shifting their weight or by pushing on an object, may provide intuitive control of the vehicle 170 requiring less instruction or training for passengers 195 to enjoy the ride 100.

In this example, the input device 180 may be a securement feature 191 and the securement feature 191 may have limited or no movement. Accordingly, a force torque sensor 175 may be connected to the securement feature to detect forces or torque on the bar from the passengers 195 shifting their weight or pushing or pulling on the input device 180.

In some examples, two or more sensors 175, 176 may be used. For example, a single input device 180 may be used for two or more passengers 195, such as a lap bar 191 extending across a row of seats 187. In another example, a first sensor 175 or a first set of sensors 175 may be associated with a first input device 180 manipulable by a first passenger 195, or group of passengers 195, and a second sensor 176 or a second set of sensors 176 may be associated with a second input device 180 manipulable by a second passenger 195, or group of passengers 195. The sensors 175, 176 may detect or determine the average or cumulative forces on the first securement feature 191, the second securement feature 191, or the two input devices 180 together.

The ride system 100 may include a motion control system 108 in communication with the various components of the interactive ride system 100. The motion control system 108 may be similar or the same as described above.

In operation, the interactive ride system 100 may simulate gliding while navigating the track 102. During the ride 100, the passengers 195 may request various changes in orientation of the vehicle 170. The passengers 195 may move or apply a force to the input device 180, such as the securement feature 191, requesting a change in orientation or a movement of the vehicle 170. The motion control system 108 may receive the inputs, such as by sensors 175, and generate corresponding instructions to implement the changes in orientation or movement. In this example, the vehicle 170 includes a body 172 corresponding to the glider and the movements may correspond to glider movements. For example, by applying a forward force or moving the securement device 191 forward, as may be detected by sensors 175, 176, the motion control system 108 may generate instructions to the motion assembly 120 to pitch the vehicle 170 downward and move downward. By passengers 195 leaning to the side and applying force or torque on the securement feature 191, as detected by the sensor 175, the motion control system 108 may generate instructions so that the motion assembly 120 changes a yaw orientation of the vehicle 170 and moves the vehicle 170 to the side. In some examples, the motion assembly 120 may move the vehicle 170 quicker downward than upward, to simulate the different effects of gravity or lift on a glider. The motion assembly 120 may move the vehicle 170 in various additional orientations or movement to simulate glider or other thematic movements in response to inputs from the passengers 195 (e.g. movements or shifts in weight by the passengers 195).

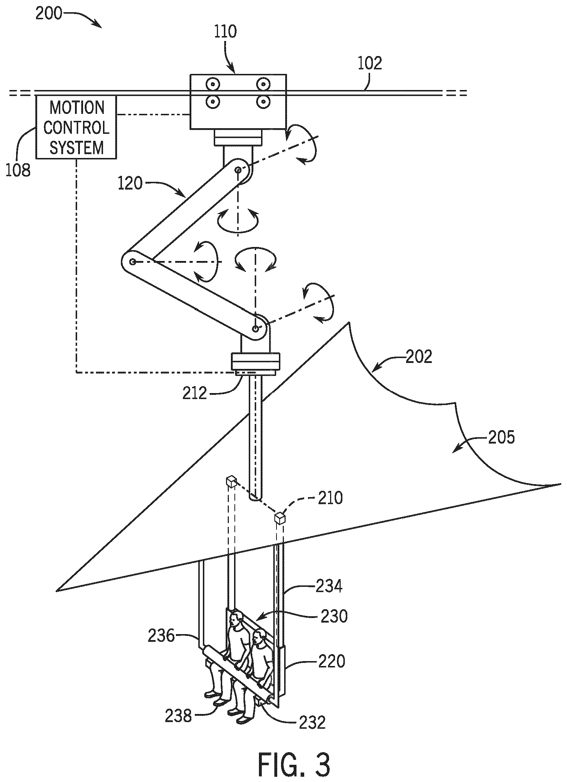

FIG. 3 provides another example of an interactive or immersive ride system 200. The interactive ride system 200 may include similar features as discussed above with reference to system 100 unless otherwise discussed such as one or more tracks 102, track modules 110, motion assemblies 120, the motion control systems 108, or various other components as discussed above. The immersive ride experience 200 may have a theme or thematic elements corresponding to glider or flying device.

The interactive ride system 200 may be arranged for control by passengers 238 by shifting their weight or changing an orientation of their bodies. The interactive ride system 200 may include a vehicle 202. The vehicle 202 may include a body 205. The body 205 may have a shape corresponding to the thematic elements (e.g. a glider wing or glider sail).

The vehicle 202 may include a passenger area 230. The passenger area 230 include one or more seats 232 for passengers 238 to ride in the vehicle 202. The seats 232 may be harnesses, chairs, or platforms to support a weight of a passenger 238. The seats 232 may be connected to the vehicle by a supporting structure or frame 234. The supporting structure or frame 234 may be rigid bars or scaffolds, cables, or other features. The supporting frame 234 may be rigidly connected or hingedly connected (e.g. allowing rotation or movement) to the body 205. For example, the supporting frame 234 and the seat 232 may define a trapeze like structure. One or more securement features 236 may secure the passengers 236 in or to their seat 232.

The vehicle 202 may include controllers or input devices 220 to receive inputs from the passengers 238. In this example, the input device 220 may be integrated with or coupled to the supporting frame 234 or the seat 232. The input device 220 may be operated by the passengers 238 shifting their weight or changing an orientation of their body relative to the vehicle 202. For example, by passengers 238 leaning in a direction, the input device 220 may move or a force or torque may be applied to the input device 220.

In this example, the sensor 210 may be in communication with or to the seat 232 or supporting frame 234. The sensors 210 may detect changes in weight or orientations of passengers 238 in their seats 232. For example, the sensors 210 may detect the forces, torque, or movement associated with the passengers 238 leaning forward, rearward, left, right, or whether there is an increase or decrease in the weight of the passengers on the seats 232.

In some examples, a second or vehicle sensor 212 may be positioned between the vehicle 202 and the motion assembly 120. The vehicle sensor 212 may detect shifts in weight of all passengers 238 of the vehicle 202 or to determine an average input from various passengers 238. By providing a sensor 212 that may determine a cumulative or average of inputs, a plurality of passengers 238 may feel in control or enjoy working together to move the vehicle 202. The sensor 212 may be used in combination with or in alternative to sensor 210.

At operation, the ride system 200 may receive inputs from passengers 238 by the passengers 238 changing their weight similar to a glider pilot shifting their weight in a real glider. Similar to ride system 100, the motion control system 108 of ride system 200 may predict or generate various instructions to the motion assembly 120 to move or change an orientation of the vehicle 202. The motion assembly 120 may manipulate the vehicle 202 in six degrees of freedom (e.g. forward or rearward, up or down, left or right, change in pitch, change in yaw, or change in roll) responsive to the instructions. For example, the vehicle 202 may move similar to a glider during flight or gliding, resulting in banking or other rotations in combination with translation movements.

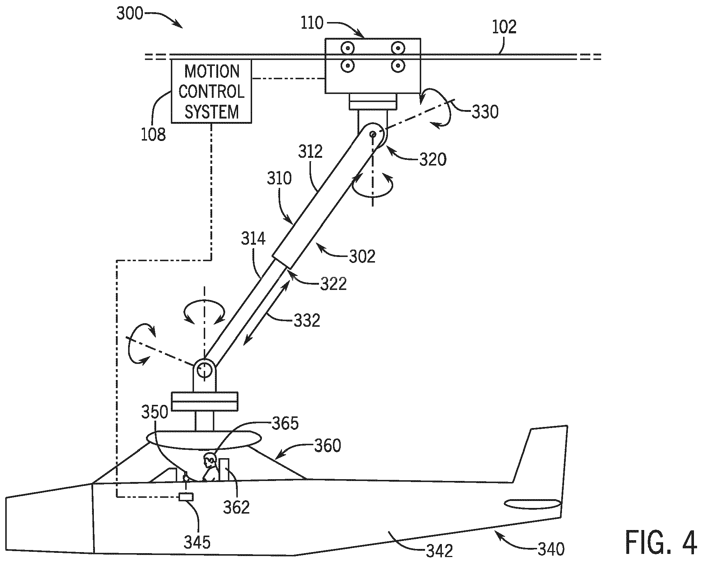

FIG. 4 provides another example of an interactive or immersive ride system 300. The interactive ride system 300 may include similar features as discussed above with reference to system 100 or 200 unless otherwise discussed such as one or more similar tracks 102, track modules 110, or motion control systems 108 as discussed above. The interactive ride system 300 may have a theme or thematic elements corresponding to an aerial vehicle such as an airplane.

The interactive ride system 300 may include a motion assembly 302. The motion assembly 302 may include links 310 or joints 320. The links 310 or joints 320 may be similar to links 123 or joints 140. In this example, the motion assembly 302 may include a first sliding link 312 and a second sliding link 314. The first sliding link 312 may be coupled to the second sliding link 314 by a linear or sliding joint 322. The joint 322 may allow the first link 312 and the second link 314 to translate relative to each other along axis 332. The linear joint 322 may allow the motion assembly 302 to provide smooth motion in various directions, such as up or down, left or right, forward or rearward, or some combination of directions.

The vehicle 340 may include a body 342 corresponding to a thematic element of the ride 300. For example, the vehicle body 342 may be correspond to an airplane. Accordingly, the body 342 may include a feature such as a wing between the motion assembly 302 and the passenger area 360 to block or limit a view of the motion assembly 302 by a passenger 365. The passenger area 360 may include a seat or cockpit 362 or similar structures to support one or more passengers 365.

The vehicle 340 may include various controllers or input devices 350 to receive an input from one or more passengers 365. The input devices 350 may correspond to the theme and include systems resembling controls of an actual aerial vehicle such as a throttle, a joystick, various buttons or switches, or other objects related to controlling an aerial vehicle.

The vehicle 340 may include one or more sensors 345. The sensors 345 may be in communication with or operatively coupled to the various input devices 350. The type of sensor 345 used may be dependent on the type of input device 350. For example, an input device 350 simulating manual flight controls may include a joystick and associated elements that resist or require a force for movement and a force torque sensor 345 may be used. In other examples, the input devices 350 may simulate a throttle or fly-by-wire system and a positional sensor 345 may be used to determine a change in position of the input device 350. Accordingly, the various types of input devices 350 or sensors 345 may add to or increase the immersive experience.

At operation, the ride system 300 may receive inputs from passengers 365 by the manipulating one or more input devices 350. Similar to ride system 100 or 200, the motion control system 108 of ride system 300 may predict or generate various instructions to the motion assembly 302 to move or change an orientation of the vehicle 340. The motion assembly 302 may manipulate the vehicle 340 in six degrees of freedom (e.g. forward or rearward, up or down, left or right, change in pitch, change in yaw, or change in roll) responsive to the instructions. In one example, the first sliding link 312, the second sliding link 314, and the sliding joint 322 may be arranged to change one or more vertical or horizontal positions of the vehicle 340 (e.g. up or down, left or right, forward or rearward). The movement of the vehicle 340 may correspond to movements of an airplane during flight.

FIG. 5 is a schematic diagram of an example computer system 500 for implementing various embodiments in the examples described herein. The computer system 500 may be used to implement various computing steps or methods, or integrated into one or more interactive ride system 100, 200, or 300 such as the motion control system 108, the various sensors 175, or input device 180. In one example, some or all of the computer system 500 may be included in the motion control system 108 or various components of the interactive ride system 100, 200, 300. In FIG. 5, the computer system 500 may include one or more processing elements 502, an input/output interface 504, a display 506, one or more memory components 508, a network interface 510, and one or more external devices 512. Each of the various components may be in communication with one another through one or more buses, communication networks, such as wired or wireless networks.

The processing element 502 may be any type of electronic device capable of processing, receiving, and/or transmitting instructions. For example, the processing element 502 may be a central processing unit, microprocessor, processor, or microcontroller. Additionally, it should be noted that some components of the computer 500 may be controlled by a first processor and other components may be controlled by a second processor, where the first and second processors may or may not be in communication with each other.

The memory components 508 are used by the computer 500 to store instructions for the processing element 502, as well as store data. The memory components 508 may be, for example, magneto-optical storage, read-only memory, random access memory, erasable programmable memory, flash memory, or a combination of one or more types of memory components.

The display 506 provides visual feedback to a user. Optionally, the display 506 may act as an input element to enable a user to control, manipulate, and calibrate various components of the system. In some examples, the input devices 180, 220, or 350 may include a display 506 or the display 506 may be used for various thematic elements. The display 506 may be a liquid crystal display, plasma display, organic light-emitting diode display, and/or other suitable display. In embodiments where the display 506 is used as an input, the display may include one or more touch or input sensors, such as capacitive touch sensors, a resistive grid, or the like.

The I/O interface 504 allows a user to enter data into the computer 500, as well as provides an input or output for the computer 500 to communicate with other devices or services. The I/O interface 504 can include one or more input buttons, touch pads, and so on. In some examples, the input devices 180 or the sensors 175 may include or be in communication with the I/O interface 504. The I/O interface 504 may be a digital or analog I/O interface 504. A digital I/O interface 504 may generate or receive digital or discrete (e.g. binary) signals. An analog I/O interface 504 may generate or receive analog or time varying signals.

The network interface 510 provides communication to and from the computer 500 to other devices. The network interface 510 includes one or more communication protocols, such as, but not limited to Wi-Fi, Ethernet, Bluetooth, and various other protocols such as Ethernet for Control Automation Technology (EtherCAT), Internet protocol (IP), Modbus, Profinet, ControlNet, DeviceNet, or Common Industrial Protocol (CIP). Any or all of which may be communicated or connected through wireless transmissions or radios or through physical media such as electrical or optical cables. The network interface 510 may also include one or more hardwired components, such as a Universal Serial Bus (USB) cable, or the like. The configuration of the network interface 510 depends on the types of communication desired and may be modified to communicate via WiFi, Bluetooth, and so on.

The external devices 512 are one or more devices that can be used to provide various inputs to the computing device 500 such as the various features of the system as described herein or additional devices, e.g., mouse, microphone, keyboard, trackpad, or the like. The external devices 512 may be local or remote and may vary as desired. In some examples, the external devices 512 may also include sensors 175, 176, 210, or 345 or one or more additional sensors. As discussed above, the sensors may include accelerometers, strain gauges, force sensors, torque sensors, resolvers, encoders, absolute position sensors, or various other types of sensors.

The above specifications, examples, and data provide a complete description of the structure and use of exemplary examples of the invention as defined in the claims. Although various examples of the disclosure have been described above with a certain degree of particularity, or with reference to one or more individual examples, those skilled in the art could make numerous alterations to the disclosed examples without departing from the scope of the claimed invention. Other examples are therefore contemplated. It is intended that all matter contained in the above description and shown in the accompanying drawings shall be interpreted as only illustrative of particular examples and not limiting. Changes in detail or structure may be made without departing from the basic elements of the invention as defined in the following claims.

All relative and directional references (including: upper, lower, upward, downward, left, right, leftward, rightward, top, bottom, side, above, below, front, middle, back, vertical, horizontal, right side up, upside down, sideways, and so forth) are given by way of example to aid the reader's understanding of the particular examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims. Any references to production or post-production are taken to apply to either production or post-production environments, methods and/or systems.

Other examples and implementations are within the scope of the disclosure and appended claims. For example, features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC (i.e., A and Band C). Further, the term "exemplary" does not mean that the described example is preferred or better than other examples.

The foregoing description, for purposes of explanation, uses specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

## Claims

1. An interactive ride experience system (100) comprising:
a motion control system (108);
a motion assembly (120);
a track module (110) suspended from a track (102) and attaching the motion assembly to the track;
a vehicle (170) coupled to the motion assembly, positioned below the track, and configured to be moved along at least one axis (154, 156, 158, 160, 162) by the motion assembly; and
a force sensor (175, 176) coupled to the vehicle and in electrical communication with the motion control system, wherein:
the force sensor is configured to be activated by a passenger (195) supported by the vehicle, and
the motion control system is configured to generate instructions for the motion assembly to change a position of the vehicle relative to the at least one axis based on the force sensor.

2. The interactive ride experience system of claim 1, further comprising:
an input device (180) coupled to the force sensor, and
wherein the force sensor is configured to detect a change in a position of or a force on the input device by the passenger, optionally wherein:
the input device is a seat (187) movable relative to a body of the vehicle, and
the position of or the force on the input device is changeable by a shift in weight of the passenger.

3. The interactive ride experience system of any preceding claim, wherein:
the track defines a pathway of the interactive ride experience system; and
the track module is movable along the pathway.

4. The interactive ride experience system of any preceding claim, the motion assembly comprising:
at least two joints (140, 142, 144, 146, 148, 150, 320, 322), and
at least two links (123, 125, 127, 129, 131, 133, 310, 312, 314),
the at least two links movable about the at least two joints, and
wherein the motion assembly is configured to modify a position of the vehicle relative to at least two axes.

5. The interactive ride experience system of any preceding claim, further comprising:
a ride environment (105) corresponding to a thematic element of the interactive ride experience system and including one or more of an imager, a set, or a combination of the imager and the set.

6. The interactive ride experience system of any preceding claim, wherein the motion assembly is configured to change at least one of: a pitch orientation of the vehicle, a roll orientation of the vehicle, or a yaw orientation of the vehicle.

7. The interactive ride experience system of any preceding claim, the vehicle comprising:
a body (172) shaped to correspond to a thematic element of the interactive ride experience system; and
wherein the body includes one or more features for obscuring or hiding the track, the one or more features positioned between a passenger area (185) of the vehicle and the motion assembly,
optionally wherein the body is shaped to represent a hang glider or an aerial vehicle.

8. The interactive ride experience system of any preceding claim, wherein the vehicle is movable in six degrees of freedom relative to the track module by the motion assembly.

9. An interactive ride experience system (100) comprising:
a track (102);
a track module (110) suspended from the track and attaching a motion assembly to the track, the track module including a chassis (112) operatively coupled to the track;
the motion assembly (120) being coupled to the chassis;
a vehicle (170) coupled to the motion assembly, the vehicle positioned below the track and moveable relative to at least one axis (154, 156, 158, 160, 162), the vehicle comprising:
a body (172) corresponding to a thematic element of the ride experience system; and
a force torque sensor (175, 176) coupled to the vehicle and in electrical communication with a motion control system (108), wherein:
the force torque sensor is configured to detect a force on or a change in a position of an input device, and
the motion assembly is configured to modify a position of the vehicle relative to the at least one axis (154, 156, 158, 160, 162) corresponding to the force on or the change in position of the input device.

10. The interactive ride experience system of claim 9, wherein the force torque sensor is configured to detect movement in six degrees of freedom.

11. The interactive ride experience system of claim 9 or claim 10, further comprising:
a ride environment (105) corresponding to the thematic element; and
wherein the motion control system is configured to modify the position of the vehicle in a manner corresponding to the ride environment and the thematic element.

12. The interactive ride experience system of any of claims 9 to 11, wherein the motion assembly comprises:
at least two links (123, 125, 127, 129, 131, 133, 310, 312, 314),
a first joint (140, 142, 144, 146, 148, 150, 320, 322) rotatable about the at least one axis (154, 156, 158, 160, 162), and
a second joint (140, 142, 144, 146, 148, 150, 320, 322) rotatable relative to a second axis transverse to the at least one axis (154, 156, 158, 160, 162).

13. The interactive ride experience system of any of claims 9 to 12, wherein the motion assembly is configured to change at least one of a roll orientation of the vehicle, a pitch orientation of the vehicle, or a yaw orientation of the vehicle.

## Patentansprüche

1. Interaktives Fahrgeschäftssystem (100), umfassend:
ein Bewegungssteuerungssystem (108);
eine Bewegungsanordnung (120);
ein Schienenmodul (110), das an einer Schiene (102) aufgehängt ist und die Bewegungsanordnung an der Schiene befestigt;
ein Fahrzeug (170), das mit der Bewegungsanordnung gekoppelt ist, unterhalb der Schiene positioniert ist und dazu ausgelegt ist, durch die Bewegungsanordnung entlang mindestens einer Achse (154, 156, 158, 160, 162) bewegt zu werden; und
einen Kraftsensor (175, 176), der mit dem Fahrzeug gekoppelt ist und in elektrischer Verbindung mit dem Bewegungssteuerungssystem steht, wobei:
der Kraftsensor dazu ausgelegt ist, von einem von dem Fahrzeug getragenen Fahrgast (195) aktiviert zu werden, und
das Bewegungssteuerungssystem dazu ausgelegt ist, Anweisungen für die Bewegungsanordnung zum Ändern einer Position des Fahrzeugs relativ zu der mindestens einen Achse basierend auf dem Kraftsensor zu erzeugen.

2. Interaktives Fahrgeschäftssystem nach Anspruch 1, ferner umfassend:
eine Eingabevorrichtung (180), die mit dem Kraftsensor gekoppelt ist, und
wobei der Kraftsensor dazu ausgelegt ist, eine Änderung einer Position oder einer Kraft auf die Eingabevorrichtung durch den Fahrgast zu detektieren, optional wobei:
die Eingabevorrichtung ein Sitz (187) ist, der relativ zu einer Karosserie des Fahrzeugs beweglich ist, und
die Position oder die Kraft auf die Eingabevorrichtung durch eine Gewichtsverlagerung des Fahrgasts veränderbar ist.

3. Interaktives Fahrgeschäftssystem nach einem der vorhergehenden Ansprüche, wobei:
die Schiene einen Pfad des interaktiven Fahrgeschäftssystems definiert; und
das Schienenmodul entlang des Pfads beweglich ist.

4. Interaktives Fahrgeschäftssystem nach einem der vorhergehenden Ansprüche, wobei die Bewegungsanordnung umfasst:
mindestens zwei Gelenke (140, 142, 144, 146, 148, 150, 320, 322) und
mindestens zwei Verbindungsglieder (123, 125, 127, 129, 131, 133, 310, 312, 314),
wobei die mindestens zwei Verbindungsglieder um die mindestens zwei Gelenke beweglich sind und
wobei die Bewegungsanordnung dazu ausgelegt ist, eine Position des Fahrzeugs relativ zu mindestens zwei Achsen zu ändern.

5. Interaktives Fahrgeschäftssystem nach einem der vorhergehenden Ansprüche, ferner umfassend:
eine Fahrgeschäftsumgebung (105), die einem thematischen Element des interaktiven Fahrgeschäftssystems entspricht und eines oder mehrere von einem Bildgeber, einem Szenenelement oder einer Kombination aus Bildgeber und Szenenelement beinhaltet.

6. Interaktives Fahrgeschäftssystem nach einem der vorhergehenden Ansprüche, wobei die Bewegungsanordnung dazu ausgelegt ist, mindestens eines von Folgendem zu ändern: eine Nickorientierung des Fahrzeugs, eine Rollorientierung des Fahrzeugs oder eine Gierorientierung des Fahrzeugs.

7. Interaktives Fahrgeschäftssystem nach einem der vorhergehenden Ansprüche, wobei das Fahrzeug umfasst:
eine Karosserie (172), die so geformt ist, dass sie einem thematischen Element des interaktiven Fahrgeschäftssystems entspricht; und
wobei die Karosserie ein oder mehrere Merkmale zum Verdecken oder Verbergen der Schiene beinhaltet, wobei das eine oder die mehreren Merkmale zwischen einem Fahrgastbereich (185) des Fahrzeugs und der Bewegungsanordnung positioniert sind,
optional wobei die Karosserie so geformt ist, dass sie einen Hanggleiter oder ein Luftfahrzeug darstellt.

8. Interaktives Fahrgeschäftssystem nach einem der vorhergehenden Ansprüche, wobei das Fahrzeug durch die Bewegungsanordnung in sechs Freiheitsgraden relativ zu dem Schienenmodul beweglich ist.

9. Interaktives Fahrgeschäftssystem (100), umfassend:
eine Schiene (102);
ein Schienenmodul (110), das an der Schiene aufgehängt ist und eine Bewegungsanordnung an der Schiene befestigt, wobei das Schienenmodul ein Chassis (112) aufweist, das betriebsfähig mit der Schiene gekoppelt ist;
wobei die Bewegungsanordnung (120) mit dem Chassis gekoppelt ist;
ein Fahrzeug (170), das mit der Bewegungsanordnung gekoppelt ist, wobei das Fahrzeug unterhalb der Schiene positioniert und relativ zu mindestens einer Achse (154, 156, 158, 160, 162) beweglich ist, wobei das Fahrzeug umfasst:
eine Karosserie (172), die einem thematischen Element des Fahrgeschäftssystems entspricht; und
einen Kraftdrehmomentsensor (175, 176), der mit dem Fahrzeug gekoppelt ist und in elektrischer Verbindung mit einem Bewegungssteuerungssystem (108) steht, wobei:
der Kraftdrehmomentsensor dazu ausgelegt ist, eine Kraft auf oder eine Änderung einer Position einer Eingabevorrichtung zu detektieren, und
die Bewegungsanordnung dazu ausgelegt ist, eine Position des Fahrzeugs relativ zu der mindestens einen Achse (154, 156, 158, 160, 162) zu ändern, die der Kraft auf oder der Änderung der Position der Eingabevorrichtung entspricht.

10. Interaktives Fahrgeschäftssystem nach Anspruch 9, wobei der Kraftdrehmomentsensor dazu ausgelegt ist, eine Bewegung in sechs Freiheitsgraden zu detektieren.

11. Interaktives Fahrgeschäftssystem nach Anspruch 9 oder Anspruch 10, ferner umfassend:
eine Fahrgeschäftsumgebung (105), die dem thematischen Element entspricht; und
wobei das Bewegungssteuerungssystem dazu ausgelegt ist, die Position des Fahrzeugs auf eine Weise zu ändern, die der Fahrgeschäftsumgebung und dem thematischen Element entspricht.

12. Interaktives Fahrgeschäftssystem nach einem der Ansprüche 9 bis 11, wobei die Bewegungsanordnung umfasst:
mindestens zwei Verbindungsglieder (123, 125, 127, 129, 131, 133, 310, 312, 314),
ein erstes Gelenk (140, 142, 144, 146, 148, 150, 320, 322), das um die mindestens eine Achse (154, 156, 158, 160, 162) drehbar ist, und
ein zweites Gelenk (140, 142, 144, 146, 148, 150, 320, 322), das relativ zu einer zweiten Achse quer zu der mindestens einen Achse (154, 156, 158, 160, 162) drehbar ist.

13. Interaktives Fahrgeschäftssystem nach einem der Ansprüche 9 bis 12, wobei die Bewegungsanordnung dazu ausgelegt ist, mindestens eine einer Rollorientierung des Fahrzeugs, einer Nickorientierung des Fahrzeugs oder einer Gierorientierung des Fahrzeugs zu ändern.

## Revendications

1. Système d'expérience de manège interactif (100) comprenant :
un système de commande à mouvement (108) ;
un ensemble à mouvement (120) ;
un module de rail (110) suspendu à un rail (102) et fixant l'ensemble à mouvement au rail ;
un véhicule (170) couplé à l'ensemble à mouvement, positionné au-dessous du rail, et configuré pour être déplacé le long d'au moins un axe (154, 156, 158, 160, 162) par l'ensemble à mouvement ; et
un capteur de force (175, 176) couplé au véhicule et en communication électrique avec le système de commande à mouvement, dans lequel :
le capteur de force est configuré pour être activé par un passager (195) supporté par le véhicule, et
le système de commande à mouvement est configuré pour générer des instructions pour l'ensemble à mouvement afin de changer une position du véhicule par rapport à l'au moins un axe sur la base du capteur de force.

2. Système d'expérience de manège interactif selon la revendication 1, comprenant en outre :
un dispositif d'entrée (180) couplé au capteur de force, et
dans lequel le capteur de force est configuré pour détecter un changement de position du, ou une force sur le, dispositif d'entrée par le passager, facultativement dans lequel :
le dispositif d'entrée est un siège (187) mobile par rapport à un fuselage du véhicule, et
la position du ou la force sur le dispositif d'entrée peut être changée par un décalage du poids du passager.

3. Système d'expérience de manège interactif selon l'une quelconque des revendications précédentes, dans lequel :
le rail définit un chemin du système d'expérience de manège interactif ; et
le module de rail est mobile le long du chemin.

4. Système d'expérience de manège interactif selon l'une quelconque des revendications précédentes, l'ensemble à mouvement comprenant :
au moins deux articulations (140, 142, 144, 146, 148, 150, 320, 322), et
au moins deux liaisons (123, 125, 127, 129, 131, 133, 310, 312, 314),
les au moins deux liaisons mobiles autour des au moins deux articulations, et
dans lequel l'ensemble à mouvement est configuré pour modifier une position du véhicule par rapport à au moins deux axes.

5. Système d'expérience de manège interactif selon l'une quelconque des revendications précédentes, comprenant en outre :
un environnement de manège (105) correspondant à un élément thématique du système d'expérience de manège interactif et incluant un ou plusieurs éléments parmi un imageur, un décor, ou une combinaison de l'imageur et du décor.

6. Système d'expérience de manège interactif selon l'une quelconque des revendications précédentes, dans lequel l'ensemble à mouvement est configuré pour changer au moins une orientation parmi : une orientation de tangage du véhicule, une orientation de roulis du véhicule, ou une orientation de lacet du véhicule.

7. Système d'expérience de manège interactif selon l'une quelconque des revendications précédentes, le véhicule comprenant :
un fuselage (172) façonné pour correspondre à un élément thématique du système d'expérience de manège interactif ; et
dans lequel le fuselage inclut une ou plusieurs caractéristiques destinées à masquer ou cacher le rail, les une ou plusieurs caractéristiques étant positionnées entre une zone passagers (185) du véhicule et l'ensemble à mouvement,
facultativement dans lequel le fuselage est façonné de manière à représenter une aile delta ou un véhicule aérien.

8. Système d'expérience de manège interactif selon l'une quelconque des revendications précédentes, dans lequel le véhicule est mobile dans six degrés de liberté par rapport au module de rail par l'ensemble à mouvement.

9. Système d'expérience de manège interactif (100) comprenant :
un rail (102) ;
un module de de rail (110) suspendu au rail et fixant un ensemble à mouvement au rail, le module de rail incluant un châssis (112) couplé de manière fonctionnelle au rail ;
l'ensemble à mouvement (120) étant couplé au châssis ;
un véhicule (170) couplé à l'ensemble à mouvement, le véhicule positionné au-dessous du rail et mobile par rapport à l'au moins un axe (154, 156, 158, 160, 162), le véhicule comprenant :
un fuselage (172) correspondant à un élément thématique du système d'expérience de manège ; et
un capteur de couple de force (175, 176) couplé au véhicule et en communication électrique avec un système de commande à mouvement (108), dans lequel :
le capteur de couple de force est configuré pour détecter une force sur un, ou un changement de position d'un, dispositif d'entrée, et
l'ensemble à mouvement est configuré pour modifier une position du véhicule par rapport à l'au moins un axe (154, 156, 158, 160, 162) correspondant à la force sur le, ou au changement de position du, dispositif d'entrée.

10. Système d'expérience de manège interactif selon la revendication 9, dans lequel le capteur de couple de force est configuré pour détecter un déplacement dans six degrés de liberté.

11. Système d'expérience de manège interactif selon la revendication 9 ou la revendication 10, comprenant en outre :
un environnement de manège (105) correspondant à l'élément thématique ; et
dans lequel le système de commande à mouvement est configuré pour modifier la position du véhicule d'une manière correspondant à l'environnement de manège et à l'élément thématique.

12. Système d'expérience de manège interactif selon l'une quelconque des revendications 9 à 11, dans lequel l'ensemble à mouvement comprend :
au moins deux liaisons (123, 125, 127, 129, 131, 133, 310, 312, 314),
une première articulation (140, 142, 144, 146, 148, 150, 320, 322) pouvant entrer en rotation autour de l'au moins un axe (154, 156, 158, 160, 162), et
une seconde articulation (140, 142, 144, 146, 148, 150, 320, 322) pouvant entrer en rotation par rapport à un second axe transversal à l'au moins un axe (154, 156, 158, 160, 162).

13. Système d'expérience de manège interactif selon l'une quelconque des revendications 9 à 12, dans lequel l'ensemble à mouvement est configuré pour changer au moins une orientation parmi une orientation de roulis du véhicule, une orientation de tangage du véhicule, ou une orientation de lacet du véhicule.
